## Europäisches Patentamt

## European Patent Office

## Office européen des brevets

(19)

(11) Numéro de publication: **0 027 071
B1**

(12) # FASCICULE DE BREVET EUROPEEN

(45) Date de publication du fascicule du brevet:
23.03.83

(51) Int. Cl.³: **G 02 B  17/06**, G 02 B  5/00

(21) Numéro de dépôt: **80401352.2**

(22) Date de dépôt: **23.09.80**

(54) **Dispositif catadioptrique utilisable comme répondeur optique.**

(30) Priorité: **05.10.79  FR 7924890**

(43) Date de publication de la demande:
**15.04.81 Bulletin 81/15**

(45) Mention de la délivrance du brevet:
**23.03.83 Bulletin 83/12**

(84) Etats contractants désignés:
**BE DE GB NL SE**

(56) Documents cités:
**FR-A-2 380 561
GB-A-1 401 687
US-A-3 049 054
US-A-3 180 217
US-A-4 097 125
NAVY TECHNICAL DISCLOSURE BULLETIN,
vol. 3 no. 7, juillet 1978 China Lake US T. B.
BAILEY: »Electrically controlled variable iris«,
pages 9—12.**

(73) Titulaire: **THOMSON-CSF, 173, Boulevard Haussmann,
F-75379 Paris Cedex 08 (FR)**

(72) Inventeur: **Arondel, Patrick, ″THOMSON-CSF″ -
SCPI 173, Bld Haussmann, F-75360 Paris Cedex 08 (FR)**
Inventeur: **Lepeytre, Jean-Paul, ″THOMSON-CSF″ -
SCPI 173, Bld Haussmann, F-75360 Paris Cedex 08 (FR)**

(74) Mandataire: **Trocellier, Roger et al, THOMSON-CSF
SCPI 173, Bld Haussmann, F-75379 Paris Cedex 08 (FR)**

## Dispositif catadioptrique utilisable comme répondeur optique

La présente invention concerne un dispositif catadioptrique ou rétroréflecteur, c'est-à-dire un dispositif optique renvoyant un rayonnement, généralement lumineux, selon sa direction d'incidence quelle que soit celle-ci dans un champ d'exploitation donné.

De tels dispositifs sont utilisés dans des domaines divers notamment pour réaliser un télémètre optique ou un répondeur optique.

On connaît par le brevet U.S. 4,097,125 et par le brevet anglais 1.401.687 des dispositifs de formation d'image avec un grossissement unité et comportant, un miroir sphérique concave formant miroir principal et un miroir sphérique convexe formant miroir secondaire placé en vis-à-vis du principal et coaxial avec celui-ci, le miroir secondaire ayant un rayon inférieur à celui du principal et de valeur qui peut être égale à la moitié de celui du principal, les centres de courbure pouvant être légèrement décalés selon l'axe optique commun du dispositif par rapprochement du miroir secondaire du miroir principal pour corriger l'aberration sphérique.

Un objet de l'invention est la réalisation d'un dispositif catadioptrique qui utilise une structure optique de ce type, perfectionnée du point de vue correction des aberrations et dont le champ angulaire d'utilisation peut être large et réglable autorisant une discrétion désirée.

Selon une caractéristique de l'invention, le dispositif catadioptre comporte des moyens délimitant une pupille d'entrée/sortie perpendiculaire à l'axe optique et centrée sur cet axe à l'endroit du centre de courbure du miroir principal. Le dispositif comporte en outre des moyens de réglage de champ sous forme d'un diaphragme réglable localisé aproximité du miroir secondaire entre celui-ci et le miroir principal.

Un autre objet de la présente invention est de rendre le dispositif catadioptrique modulable pour transmettre en retour une information par modulation du rayonnement réfléchi, de manière à permettre notamment son application dans le domaine des répondeurs de systèmes d'identification ami-ennemi encore appelés systèmes IFF (Identification Friend or Foe).

Selon un mode de réalisation de l'invention, le dispositif catadioptrique comporte un dispositif obturateur électro-optique modulable (cristaux liquides, céramiques ferroélectriques, etc...) disposé à l'endroit de la pupille pour moduler le rayonnement réfléchi.

Les particularités et avantages de l'invention apparaîtront dans la description qui suit donnée à titre d'exemple non limitatif à l'aide des figures annexées qui représentent:

la Fig. 1, un schéma simplifié d'un dispositif catadioptrique conforme à l'invention,

la Fig. 2, un schéma d'un exemple de réalisation du dispositif catadioptrique pour former un répondeur optique.

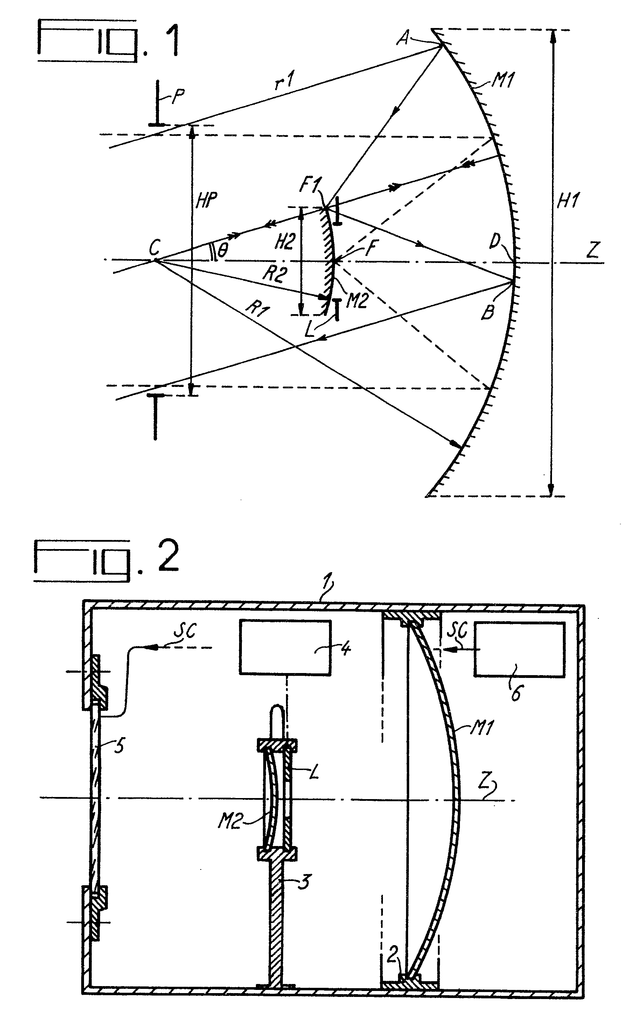

Le dispositif représenté à la Fig. 1 se compose d'un groupement de deux miroirs sphériques, un premier miroir spérique M1 dit miroir principal et un second miroir sphérique M2 de plus faibles dimensions dit miroir secondaire, de moyens P formant une pupille circulaire et de moyens L de réglage du champ. Les miroirs sont disposés en vis-à-vis, le miroir principal étant concave et le miroir secondaire convexe et de manière à présenter un axe de symétrie commun Z constituant l'axe optique du dispositif. En désignant par R1 et R2 les rayons respectifs des miroirs M1 et M2, ces valeurs sont dans le rapport 2/1 ou sensiblement, c'est-à-dire, que $R1 = 2\,R2$. On considère à priori, le miroir secondaire positionné axialement en sorte que les centres de courbure sont confondus en C, la distance axiale FD entre les miroirs vaut dans ce cas R2; H1 et H2 désignent la largeur respective des miroirs constitués chacun par une portion de sphère délimitée par un plan orthogonal à l'axe Z; HP représente le diamètre de la pupille circulaire. Cette pupille est formée dans un plan orthogonal à l'axe Z passant par le centre de courbure C; elle est centrée sur le point C par raison de symétrie.

Pour un tel montage optique la pupille d'entrée constituée par l'ouverture de diamètre HP constitue également la pupille de sortie du dispositif.

Un rayon incident sort selon une direction sensiblement rétrodirective après trois réflexions. Le rayon r1 par exemple, pénètre par la pupille d'entrée, est réfléchi une première fois sur le miroir M1 en A, puis une seconde fois sur le miroir M2 en F1 et une troisième fois sur le miroir M1 en B et ressort parallèlement à la direction initiale si l'on fait abstraction de l'aberration sphérique et que l'on considère être placé dans les conditions d'approximation de GAUSS. Le miroir M2 représente la sphère focale de M1 c'est-à-dire le lieu des foyers, F1 est le foyer de focalisation d'un faisceau incident de direction r1. Les rayons sortants sont limités à ceux qui n'ont pas été occultés par le miroir M2.

Une direction d'incidence fait partie du champ angulaire du dispositif tant que la focalisation due au miroir M1 se produit en un point sur la portion de sphère délimitant le miroir M2. L'angle de champ $\theta$ se trouve donc défini par la relation $\sin\theta = H2/2\,R2$ ou $\sin\theta = H2/R1$.

Toutes les aberrations, sauf l'aberration sphérique, sont éliminées par le fait que la pupille P est disposée dans le plan passant par le centre de courbure C des miroirs et perpendiculaire à l'axe optique Z du dispositif. L'aberration sphérique peut être très fortement réduite en déplaçant légèrement le miroir secondaire M2 par translation le long de l'axe Z de manière à le rapprocher du miroir principal M1. Le déplacement ne peut guère excéder la valeur 0,04 R2 afin de ménager la qualité optique du dispositif pour une exploitation centrée sur l'axe. A titre d'exemple, pour un diamètre de pupille égal à R2 et un rapprochement de 0,02 R2 (la distance axiale FD entre les miroirs devient 0,98 R2), l'aberration sphérique est négligeable pour une exploitation dans un champ de ±20° (1,5 à 5 mrd au lieu de 17 à 33 mrd). Dans ce concept C représente le centre de courbure du miroir principal, celui du miroir secondaire se trouvant déplacé le long de l'axe Z de la quantité considérée. Le dispositif catadioptrique autorise ainsi un réglage possible par positionnement axial relatif des miroirs.

Le dispositif catadioptrique autorise également un réglage du champ par un diaphragme réglable L disposé devant le miroir M2 à proximité, c'est-à-dire sensiblement dans le plan orthogonal à l'axe Z et passant par F. Le point F représente le foyer principal correspondant à la focalisation des rayons d'incidence nulle (direction de l'axe Z). Le champ peut être rendu aussi faible qu'on le désire par réglage du diaphragme L; il peut également être réglé très élevé par exemple ±30 à ±45°, sans altération sensible de la qualité optique.

Le dispositif catadioptrique est constitué avec des éléments peu nombreux et simples et il est rigoureusement achromatique puisque les éléments optiques ne comportent que des miroirs. Dans sa structure la plus simple il comporte les deux miroirs M1 et M2 et des moyens formant la pupille P, ces moyens pouvant consister en une ouverture circulaire dans un boîtier contenant l'ensemble; les miroirs sont concentriques ou non selon ce qui a été dit précédemment au sujet du réglage axial possible du miroir secondaire. Cette structure peut être dotée de moyens de réglage de champ L, par exemple un diaphragme à pales articulées appelé diaphragme à iris.

Un autre aménagement du dispositif catadioptrique selon l'invention consiste à le doter de moyens obturateur permettant de moduler le rayonnement réfléchi. Ces moyens comportent un élément opturateur optoélectrique disposé dans la pupille P tel une lame en matériau ferro-électrique par exemple. Ainsi le dispositif peut être utilisé comme répondeur sur sollicitation d'un rayonnement déterminé émis par une station émettrice annexe et il peut renvoyer un message par modulation du faisceau réfléchi. Une telle utilisation est envisageable dans un système d'identification ami-ennemi.

La Fig. 2 montre un schéma simplifié d'une forme de réalisation possible du dispositif catadioptrique sur laquelle on a reporté les divers aménagements signalés précédemment. L'ensemble optique M1 et M2 est disposé dans un boîtier 1 muni d'une ouverture formant la pupille. L'élément 2 symbolise une fixation périphérique du miroir principal M1 au boîtier. Le miroir secondaire M2 est positionné à l'aide de trois bras 3 disposés à 120°, solidaires du boîtier et déterminés en sorte de présenter une surface d'occultation faible. Le diaphragme L est également supporté par les éléments 3. Le bloc 4 représente les moyens de réglage du diaphragme L, ces moyens pouvant être en partie externes au boîtier, cas d'une commande manuelle par exemple. Un obturateur opto-électrique 5, par exemple une lame PLZT, est disposée à l'endroit de la pupille, la commande électrique SC correspondante est élaborée par un circuit de commande 6. Les traitements des miroirs M1 et M2 et l'obturateur 5 sont déterminés en fonction de la bande de longueur d'onde d'exploitation envisagée. Le diamètre de la pupille conditionne le niveau de flux transmissible, et le diaphragme L le champ d'observation et la discrétion du dispositif.

Le dispositif est envisagé plus particulièrement pour réfléchir un rayonnement lumineux, celui émis par un laser par exemple (télémètre optique, système IFF optique etc...) mais on peut se rendre compte également que son exploitation est possible pour un rayonnement électro-magnétique micro-ondes (domaine radar, répondeur hyperfréquence, balise...).

Dans le cadre d'une application à un système IFF le dispositif est complété par une partie réceptrice où le rayonnement reçu est détecté et identifié de manière à commander la modulation par l'intermédiaire du circuit 6. Ces éléments ne sont pas décrits et peuvent être réalisés de diverses manières; on pourra se reporter notamment à la description faite dans la demande de brevet français 77.01920 du 25. 01. 77 publiée sous le n° 2.378.404. On trouve également dans ce document des indications relatives à l'utilisation d'une céramique ferro-électrique pour moduler le rayonnement renvoyé.

## Revendications

1. Dispositif catadioptrique comportant un miroir sphérique concave (M1) dit miroir principal de rayon R1 et d'axe de symétrie (Z) passant par son centre de courbure (C), un miroir sphérique convexe (M2) dit miroir secondaire de rayon R2 = R1/2 dont l'axe de symétrie est confondu avec celui du miroir principal pour constituer l'axe optique du système et qui est disposé en vis-à-vis du miroir principal à une distance (FD) de ce dernier au plus égale à la valeur R2 et sensiblement égale à cette valeur pour corriger l'aberration sphérique, le dispositif étant caractérisé en ce qu'il comporte des moyens délimitant une pupille (P) dans un plan orthogonal audit axe et centré sur le centre de courbure du miroir principal, ces moyens constituant à la fois une pupille d'entrée et de sortie pour le dispositif, et des moyens de réglage de champ sous forme d'un diaphragme réglable (L) localisé à proximité du miroir secondaire entre ce dernier et le miroir principal.

2. Dispositif selon la revendication 1, caractérisé en ce qu'il comporte en outre, des moyens de modulation du rayonnement réfléchi utilisant un dispositif obturateur opto-électrique (5) localisé dans le plan de la pupille.

3. Dispositif selon la revendication 2, caractérisé en ce que le diaphragme est du type à iris et en ce que le dispositif obturateur comporte une lame en matériau ferro-électrique (5) et son circuit de commande électrique (6).

4. Utilisation d'un dispositif selon la revendication 2 ou 3, pour constituer un répondeur dans un ensemble d'identification ami/ennemi par voie optique.

## Patentansprüche

1. Katadiopervorrichtung mit einem konkaven sphärischen Hauptspiegel (M1) des Radius R1 und mit einer Symmetrieachse (Z), die durch seinen Krümmungsmittelpunkt (C) geht, mit einem konvexen sphärischen Hilfsspiegel (M2) des Radius R2 = R1/2, dessen Symmetrieachse mit derjenigen des Hauptspiegels zusammenfällt, um die optische Achse des Systems zu bilden, und der dem Hauptspiegel gegenüber in einem Abstand (FD) von diesem angeordnet ist, der höchstens gleich dem Wert R2 und ungefähr gleich diesem Wert ist, um die sphärische Aberration zu korrigieren, wobei die Vorrichtung dadurch gekennzeichnet ist, daß sie Mittel umfaßt, die eine Pupille (P) in einer zu der genannten Achse senkrechten Ebene und zentriert auf den Krümmungsmittelpunkt des Hauptspiegels bilden, wobei diese Mittel sowohl eine Eingangspupille als auch eine Ausgangspupille für die Vorrichtung bilden, und Feldeinstellungsmittel in Form einer einstellbaren Blende (L) aufweist, die in der Nähe des Hilfsspiegels zwischen diesem und dem Hauptspiegel angeordnet ist.

2. Vorrichtung nach Anspruch 1, dadurch gekennzeichnet, daß sie ferner Mittel zum Modulieren der reflektierten Strahlung unter Anwendung einer optoelektrischen Verschlußvorrichtung (5), die in der Ebene der Pupille liegt, umfaßt.

3. Vorrichtung nach Anspruch 2, dadurch gekennzeichnet, daß die Blende eine solche vom Iristyp ist und daß die Verschlußvorrichtung eine Platte aus ferroelektrischem Material (5) sowie die zugeordnete elektrische Steuerschaltung (6) umfaßt.

4. Verwendung einer Vorrichtung nach Anspruch 2 oder 3 zur Bildung eines Antwortsenders in einer optisch arbeitenden Freund/Feind-Erkennungseinheit.

## Claims

1. Catadioptric device comprising a spherical concave main mirror (M1) having the radius R1 and a symmetry axis (Z) traversing its curvature center (C), a spherical convex secondary mirror (M2) of radius R2 = R1/2 and having a symmetry axis coincident with that of the main mirror, to form the optic axis of the system, and which is placed opposite the main mirror and at a spacing (FD) therefrom which is at least equal to the value R2 and substantially equal to that value in order to correct for the spherical aberration, the device being characterized in that it comprises means defining an aperture (P) in a plane which is normal to said axis and centered on the curvature center of the main mirror, these means forming both the input and output aperture of the device, and field adjustment means in the form of an adjustable diaphragm (L) located near the secondary mirror between the same and the main mirror.

2. Device in accordance with claim 1, characterized in that it further comprises reflected radiation modulation means using an optoelectric shutter (5) located within the plane of the aperture.

3. Device in accordance with claim 2, characterized in that the diaphragm is of iris type and in that the shutter device comprises a plate (5) of ferroelectric material and its electric control circuit (6).

4. Use of a device in accordance with claims 2 or 3, to form a responder in an optic friend/enemy identification unit.

# Fig. 1

# Fig. 2